# FASCICULE DE BREVET EUROPEEN

(11) **EP 4 033 084 B1**
(45) Date de publication et mention de la délivrance du brevet: **06.12.2023**
(21) Numéro de dépôt: 22151861.6
(22) Date de dépôt: 17.01.2022
(51) Int. Cl.: F02K 1/76, F02K 1/72, F02K 1/62

(54) **TURBORÉACTEUR DOUBLE FLUX COMPORTANT UN SYSTÈME D'OBTURATION DE LA VEINE DU FLUX SECONDAIRE COMPORTANT DES VOILES**
ZWEISTRAHLIGES TRIEBWERK MIT EINEM ABDICHTUNGSSYSTEM FÜR DIE SEKUNDÄRSTRÖMUNG, DAS SEGEL UMFASST
TURBOFAN ENGINE COMPRISING A SYSTEM FOR BLOCKING THE BYPASS FLOW BY MEANS OF FLEXIBLE ELEMENTS

(30) Priorité: 22.01.2021 FR 2100620
(43) Date de publication de la demande: 27.07.2022
(73) Titulaire: AIRBUS OPERATIONS, 31060 Toulouse Cedex 9 (FR)
(72) Inventeur: PORTE, Alain, 31060 TOULOUSE (FR); CZAPLA, Lionel, 31060 TOULOUSE (FR); THUBERT, Benjamin, 31060 TOULOUSE (FR)
(74) Mandataire: Cabinet Le Guen Maillet

(56) Documents cités:
- FR-A1- 3 076 864
- FR-A1- 3 087 848
- US-A- 2 933 890

## Description

### DOMAINE TECHNIQUE

La présente invention concerne un turboréacteur double flux qui comporte des voiles souples et un système pneumatique de déploiement qui déploie les voiles pour obturer la veine du flux secondaire et qui plie les voiles pour libérer la veine du flux secondaire, ainsi qu'un aéronef comportant au moins un tel turboréacteur double flux.

### ÉTAT DE LA TECHNIQUE ANTÉRIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée.

Bien que les portes d'inversion donnent entière satisfaction, il est souhaitable de trouver des mécanismes différents, en particulier des mécanismes moins lourds. FR3076864 A1, ; US2933890 A et FR3087848 A1 divulguent des turboréacteurs avec des systèmes d'inversion de poussée de l'art antérieur.

### EXPOSÉ DE L'INVENTION

Un objet de la présente invention est de proposer un turboréacteur double flux qui comporte des voiles souples et un système pneumatique qui déploie les voiles pour obturer la veine du flux secondaire et qui plie les voiles pour libérer la veine du flux secondaire.

À cet effet, est proposé un turboréacteur double flux présentant une direction longitudinale et comportant un moteur et une nacelle entourant le moteur qui comporte un carter de soufflante, où une veine d'un flux secondaire est délimitée entre la nacelle et le moteur et dans laquelle un flux d'air circule de l'avant vers l'arrière du turboréacteur double flux, ladite nacelle comportant :
- une structure fixe fixée au carter de soufflante,
- un capot mobile qui est mobile en translation sur la structure fixe selon une direction de translation entre une position avancée dans laquelle le capot mobile est positionné de manière à ce qu'il soit rapproché du carter de soufflante et une position reculée dans laquelle le capot mobile est positionné de manière à ce qu'il soit éloigné du carter de soufflante pour définir entre eux une fenêtre ouverte entre la veine et l'extérieur de la nacelle,
- un ensemble d'actionneurs assurant le déplacement du capot mobile entre la position avancée et la position reculée, et inversement,
- une pluralité de voiles souples, présentant un premier bord fixé au capot mobile et un deuxième bord opposé au premier bord, où ledit voile peut prendre alternativement une position pliée dans laquelle ledit voile est logé dans le capot mobile ou une position déployée dans laquelle ledit voile est étendu entre le premier bord et le moteur en travers de la veine, et
- un système pneumatique arrangé pour déplacer le deuxième bord de chaque voile afin de déplacer ledit voile de la position pliée à la position déployée et pour déplacer le deuxième bord de chaque voile afin de déplacer ledit voile de la position déployée à la position pliée, où le système pneumatique comporte :
- un boudin principal rigide et fixé à l'intérieur du capot mobile à l'arrière de la fenêtre,
- pour chaque voile, au moins un boudin secondaire extensible et solidaire du boudin principal et où l'intérieur de chaque boudin secondaire est en continuité fluidique avec l'intérieur du boudin principal, où le deuxième bord dudit voile est fixé à chacun desdits boudins secondaires, et
- un système de pressurisation et de dépressurisation qui, alternativement, génère une pression dans le boudin principal et donc dans chaque boudin secondaire pour les gonfler lors du passage de la position avancée à la position reculée, ou génère une dépression dans le boudin principal et donc dans chaque boudin secondaire pour les dégonfler lors du passage de la position reculée à la position avancée.

Le remplacement des portes d'inversion et de leurs mécanismes d'entraînement par des voiles souples et un système pneumatique permet une réduction de masse.

Avantageusement, le système de pressurisation et de dépressurisation comporte :
- un tube à effet Venturi avec une section d'entrée, une section de sortie et une section intermédiaire entre la section d'entrée et la section de sortie, où la section d'entrée est fluidiquement connectée à un point de prélèvement d'air dans la veine,
- une canalisation de déviation dont une entrée est fluidiquement connectée à la section d'entrée et dont une sortie est fluidiquement connectée à la section intermédiaire,
- une canalisation terminale dont une entrée est fluidiquement connectée à la canalisation de déviation et dont une sortie est fluidiquement connectée au boudin principal,
- une première vanne disposée au niveau de l'entrée de la canalisation de déviation et qui peut prendre alternativement une position ouverte autorisant le passage entre la section d'entrée et la canalisation de déviation ou une position fermée empêchant le passage entre la section d'entrée et la canalisation de déviation,
- une deuxième vanne disposée au niveau de l'entrée de la canalisation terminale et qui peut prendre alternativement une première position autorisant le passage entre la canalisation de déviation et la canalisation terminale depuis l'entrée de la canalisation de déviation et empêchant le passage entre la canalisation terminale et la canalisation de déviation vers la sortie de la canalisation de déviation, et une deuxième position autorisant le passage entre la canalisation terminale et la canalisation de déviation vers la sortie de la canalisation de déviation et empêchant le passage entre la canalisation de déviation et la canalisation terminale depuis l'entrée de la canalisation de déviation, et
- une troisième vanne disposée au niveau de la sortie de la canalisation de déviation et qui peut prendre alternativement une position ouverte autorisant le passage entre la canalisation de déviation et la section de sortie ou une position fermée empêchant le passage entre la canalisation de déviation et la section de sortie.

Avantageusement, le turboréacteur double flux comporte :
- pour chaque voile, un rouleau monté libre en rotation sur le capot mobile en arrière de la fenêtre lorsque le capot mobile est en position reculée, où le premier bord dudit voile est fixé audit rouleau, où en position pliée ledit voile est enroulé autour du rouleau ou en position déployée ledit voile est déroulé du rouleau,
- un mécanisme de déploiement arrangé pour déplacer le deuxième bord de chaque voile afin de déplacer ledit voile de la position pliée à la position déployée, et
- un mécanisme de pliage arrangé pour entraîner chaque rouleau en rotation afin de déplacer le voile associé audit rouleau de la position déployée à la position pliée.

Avantageusement, le mécanisme de déploiement comporte :
- pour chaque deuxième bord, une plaque solidaire du deuxième bord,
- pour chaque plaque, au moins une poulie de tirage montée libre en rotation sur ladite plaque,
- un câble qui passe par chaque poulie de tirage, et
- pour chaque extrémité dudit câble, un système de déplacement débrayable qui assure le tirage de ladite extrémité.

Avantageusement, il y a une poulie de tirage à chaque extrémité de ladite plaque.

Avantageusement, chaque système de déplacement comporte un ensemble de poulies de guidage et un enrouleur électrique sur lequel s'enroule le câble.

Selon un mode de réalisation particulier, le mécanisme de pliage comporte pour chaque rouleau, une poulie de déviation fixée de manière coaxiale au rouleau, une poulie d'enroulement fixée à la structure fixe, un câble d'enroulement dont une extrémité est fixée à la structure fixe et dont l'autre extrémité est fixée à la poulie d'enroulement et où le câble d'enroulement passe par la poulie de déviation, un amortisseur à azote dont un cylindre est fixé à la structure fixe et dont un piston est coulissant dans le cylindre, et un système de transformation qui assure la transformation du mouvement de rotation de la poulie d'enroulement en un mouvement de translation du piston et inversement.

Selon un mode de réalisation particulier, le mécanisme de pliage comporte pour chaque rouleau, une poulie de déviation fixée de manière coaxiale au rouleau, une poulie d'enroulement, un câble d'enroulement dont une extrémité est fixée à la structure fixe et dont l'autre extrémité est fixée à la poulie d'enroulement et où le câble d'enroulement passe par la poulie de déviation, et un enrouleur électrique débrayable sur lequel est fixée la poulie d'enroulement.

L'invention propose également un aéronef comportant au moins un turboréacteur double flux selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un turboréacteur double flux selon l'invention,
[Fig. 2] est une vue en perspective du turboréacteur double flux selon l'invention en position déployée des voiles,
[Fig. 3] est une représentation schématique d'un turboréacteur double flux selon l'invention vu en coupe par un plan radial et en position avancée et pliée,
[Fig. 4] est une représentation schématique d'un turboréacteur double flux selon l'invention vu en coupe par un plan radial et en position reculée et déployée,
[Fig. 5] est une représentation d'un système de pressurisation et de dépressurisation dans une position de pressurisation mise en oeuvre dans le cadre de l'invention,
[Fig. 6] montre le système de pressurisation et de dépressurisation de la Fig. 5 en position de maintien de la pression,
[Fig. 7] montre le système de pressurisation et de dépressurisation de la Fig. 5 en position de dépressurisation,
[Fig. 8] est une représentation schématique et en vue de face d'un mécanisme de déploiement en position pliée,
[Fig. 9] est une représentation schématique et en vue de face du mécanisme de déploiement en position déployée, et
[Fig. 10] est une vue en perspective d'un mécanisme de pliage.

### EXPOSÉ DÉTAILLÉ DE MODES DE RÉALISATION

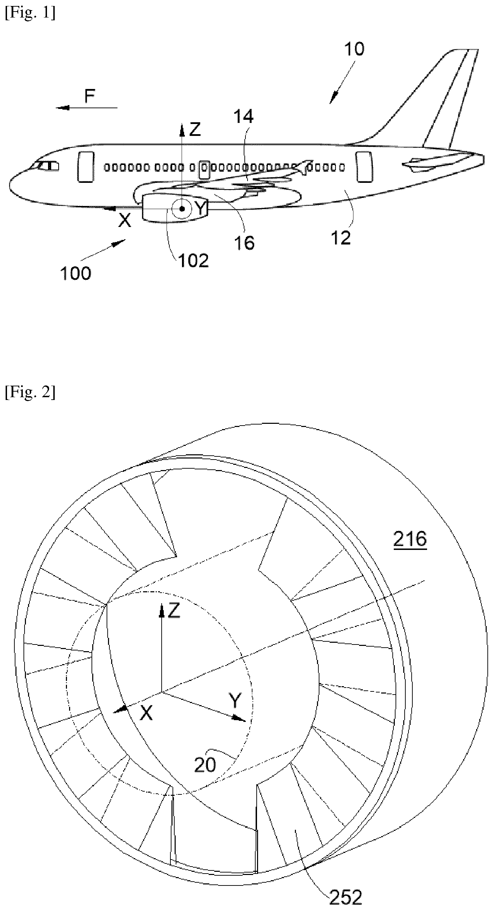

Dans la description qui suit, les termes relatifs à une position sont pris en référence au sens d'avancement d'un aéronef tel que représenté sur la Fig. 1 par la flèche F.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

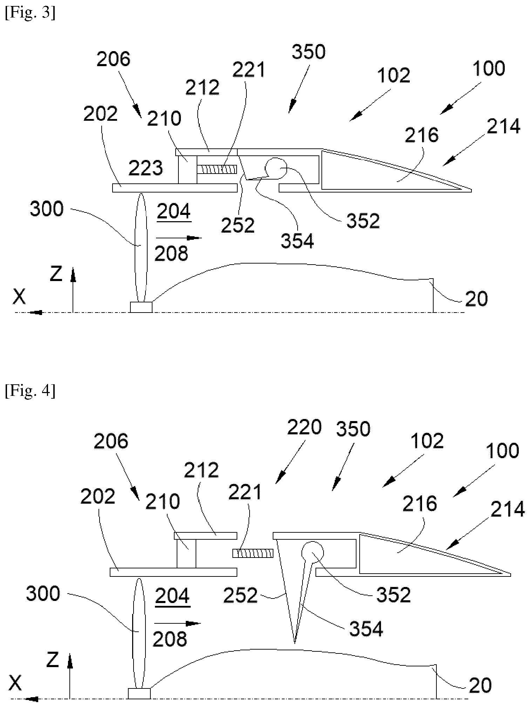

La Fig. 3 et la Fig. 4 montrent le turboréacteur double flux 100 qui présente une nacelle 102 et un moteur 20 qui est logé à l'intérieur de la nacelle 102. Le turboréacteur double flux 100 comporte également un carter de soufflante 202.

Dans la description qui suit, et par convention, on appelle X la direction longitudinale du turboréacteur double flux 100 qui est parallèle à l'axe longitudinal de l'aéronef 10 orienté positivement vers l'avant de l'aéronef 10, on appelle Y la direction transversale qui est horizontale lorsque l'aéronef est au sol, et Z la direction verticale, ces trois directions X, Y et Z étant orthogonales entre elles.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière du turboréacteur double flux 100.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 fixés au cadre avant 210 et formant une surface aérodynamique extérieure.

La nacelle 102 présente un ensemble mobile 214 qui présente un capot mobile 216 qui forme ici les parois extérieures de la tuyère.

La nacelle 102 présente également des cascades 221 qui sont solidaires de l'ensemble mobile 214.

Le capot mobile 216 est monté mobile en translation selon une direction de translation globalement parallèle à la direction longitudinale X sur la structure fixe 206 de la nacelle 102.

Le capot mobile 216 est mobile entre une position avancée (Fig. 3) et une position reculée (Fig. 4) et inversement. En position avancée, le capot mobile 216 est positionné le plus en avant possible par rapport au sens d'avancement de manière à ce que le capot mobile 216 soit rapproché des panneaux extérieurs 212 et du carter de soufflante 202 et forme ainsi une surface aérodynamique continue. En position reculée, le capot mobile 216 est positionné le plus en arrière possible par rapport au sens d'avancement de manière à ce que le capot mobile 216 soit éloigné des panneaux extérieurs 212 et du carter de soufflante 202 de manière à définir entre eux une fenêtre 220 qui s'ouvre entre la veine 204 et l'extérieur et où se positionnent les cascades 221.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204. En position avancée, les cascades 221 logent entre les panneaux extérieurs 212 et le carter de soufflante 202.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100 en traversant les cascades 221.

La translation du capot mobile 216 est réalisée par tous moyens appropriés, comme par exemple, des systèmes de glissières entre les poutres de la structure fixe 206 et le capot mobile 216.

La nacelle 102 comporte également un ensemble d'actionneurs (non représentés) assurant le déplacement en translation du capot mobile 216 entre la position avancée et la position reculée et inversement. Chaque actionneur est commandé par une unité de contrôle, par exemple du type processeur, qui commande les déplacements dans un sens ou dans l'autre selon les besoins de l'aéronef 10.

Chaque actionneur peut prendre par exemple la forme d'un vérin à double effet (deux directions de travail) dont le cylindre est fixé à la structure fixe 206 et une tige fixée au capot mobile 216.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La Fig. 2 montre le capot mobile 216 et le moteur 20 qui est matérialisé ici par un cylindre en traits mixtes.

La nacelle 102 comporte une pluralité de voiles 252 où chacun est souple et prend ici globalement la forme d'un trapèze. Chaque voile 252 peut prendre alternativement une position pliée (Fig. 3) ou une position déployée (Figs. 2 et 4). Chaque voile 252 présente un premier bord fixe et un deuxième bord mobile opposé au premier bord. Chaque premier bord est fixé au capot mobile 216, à l'intérieur du capot mobile 216, en dehors de la veine 204 et en arrière de la fenêtre 220 lorsque le capot mobile 216 est en position reculée.

En position pliée, chaque voile 252 est logé dans le capot mobile 216 et en position déployée, le voile 252 est étendu entre le premier bord et le deuxième bord qui s'étend au voisinage du moteur 20 en travers de la veine 204 afin de l'obturer. Ainsi, le deuxième bord s'éloigne du premier bord dans la position déployée et se rapproche du premier bord en position pliée.

Ici, chaque premier bord est inscrit dans un plan perpendiculaire à la direction longitudinale X et est perpendiculaire à la direction radiale par rapport à la direction longitudinale X et passant par le milieu du premier bord.

La nacelle 102 comporte également un système pneumatique 350 qui est arrangé pour déplacer le deuxième bord de chaque voile 252 afin de déplacer ledit voile 252 de la position pliée à la position déployée et pour déplacer le deuxième bord de chaque voile 252 afin de déplacer ledit voile 252 de la position déployée à la position pliée.

Le système pneumatique 350 est synchronisé avec le déplacement du capot mobile 216 pour que le passage de la position pliée à la position déployée corresponde au passage de la position avancée à la position reculée, et pour que le passage de la position déployée à la position pliée corresponde au passage de la position reculée à la position avancée.

En position déployée, les voiles 252 sont positionnés en arrière de la fenêtre 220 en formant une barrière dans la veine 204 pour dévier le flux secondaire 208 provenant de l'avant vers la fenêtre 220. En position déployée, le deuxième bord de chaque voile 252 vient autour du moteur 20.

Le fonctionnement consiste ainsi, à partir de la position avancée/pliée, à commander l'activation des actionneurs pour déplacer le capot mobile 216 de la position avancée à la position reculée, ce qui entraîne le déplacement des cascades 221 en face de la fenêtre 220.

Au cours de ce déplacement, le système pneumatique 350 déploie chaque voile 252 en travers de la veine 204.

A l'inverse, le fonctionnement consiste ainsi, à partir de la position reculée/déployée, à commander l'activation des actionneurs pour déplacer le capot mobile 216 de la position reculée à la position avancée, ce qui entraîne le déplacement des cascades 221 vers leur position initiale.

Au cours de ce déplacement, le système pneumatique 350 plie chaque voile 252 sur l'extérieur de la veine 204.

L'utilisation de plusieurs voiles 252 souples permet un allégement de l'ensemble par rapport à l'utilisation de portes d'inversion de l'état de la technique. En outre, les voiles 252 permettent d'ajuster l'efficacité et l'aéramatch qui caractérisent un inverseur de poussée. Le terme « aéramatch » désigne ici le rapport entre la section de sortie de la tuyère en jet direct et la section de sortie de la tuyère en inversion de poussée.

Le système pneumatique 350 comporte un boudin principal 352 fixé à l'intérieur du capot mobile 216 à l'arrière de la fenêtre 220 et prenant globalement la forme d'un tore autour de la direction longitudinale X et, pour chaque voile 252, au moins un boudin secondaire 354 qui est solidaire du boudin principal 352 et où l'intérieur de chaque boudin secondaire 354 est en continuité fluidique avec l'intérieur du boudin principal 352. Le matériau constituant le boudin principal 352 est rigide, par exemple en métal, et le matériau constituant les boudins secondaires 354 est très extensible, par exemple en caoutchouc.

Chaque boudin secondaire 354 prend par exemple la forme d'un tuyau dont une première extrémité est fixée au boudin principal 352 et dont une deuxième extrémité est libre et bouchée. Chaque boudin secondaire 354 prend par exemple la forme d'un tuyau dont les deux extrémités sont fixées au boudin principal 352 formant ainsi une boucle.

Pour chaque boudin secondaire 354 associé à un voile 252, le deuxième bord dudit voile 252 est fixé à chaque boudin secondaire 354, soit au niveau de la deuxième extrémité libre, soit au niveau du milieu du tuyau selon le type de boudin secondaire 354. En tout état de cause, le deuxième bord est fixé au boudin secondaire 354 de manière à ce que lorsque le boudin secondaire 354 est gonflé, le deuxième bord se positionne autour du moteur 20. Plus le nombre de boudins secondaires 354 pour un voile 252 sera important, meilleure sera la tension du deuxième bord en position déployée.

Le système pneumatique 350 comporte un système de pressurisation et de dépressurisation qui, alternativement, génère une pression dans le boudin principal 352 et donc dans chaque boudin secondaire 354 pour les gonfler, ou génère une dépression dans le boudin principal 352 et donc dans chaque boudin secondaire 354 pour les dégonfler. Le système de pressurisation et de dépressurisation est commandé par l'unité de contrôle en fonction des besoins.

Ainsi, lors du passage de la position avancée/pliée à la position reculée/déployée, l'unité de contrôle commande le système de pressurisation et de dépressurisation pour lui faire générer une pression et gonfler les boudins secondaires 354 et ainsi déployer les voiles 252, et lors du passage de la position reculée/déployée à la position avancée/pliée, l'unité de contrôle commande le système de pressurisation et de dépressurisation pour lui faire générer une dépression et dégonfler les boudins secondaires 354 et ainsi replier les voiles 252.

Le système de pressurisation et de dépressurisation peut être par exemple un ventilateur commandé par l'unité de contrôle et pouvant générer alternativement une pression ou une dépression dans le boudin principal 352.

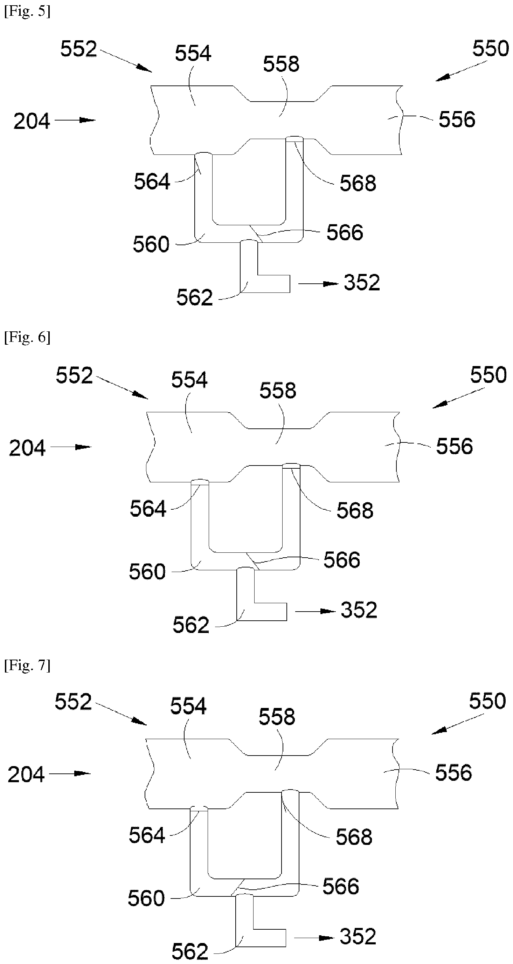

Les Figs. 5 à 7 montrent un système de pressurisation et de dépressurisation particulier 550. Le système de pressurisation et de dépressurisation particulier 550 comporte un tube à effet Venturi 552 qui présente une section d'entrée 554, une section de sortie 556 et une section intermédiaire 558 entre la section d'entrée 554 et la section de sortie 556, où le diamètre de la section intermédiaire 558 est inférieur aux diamètres des sections d'entrée 554 et de sortie 556.

La section d'entrée 554 est fluidiquement connectée à un point de prélèvement d'air chaud dans la veine 204 et la section de sortie 556 est fluidiquement connectée par exemple à un système de chauffage de la cabine de l'aéronef 10.

Le système de pressurisation et de dépressurisation particulier 550 comporte également une canalisation de déviation 560 dont une entrée est fluidiquement connectée à la section d'entrée 554 et dont une sortie est fluidiquement connectée à la section intermédiaire 558.

Le système de pressurisation et de dépressurisation particulier 550 comporte une canalisation terminale 562 dont une entrée est fluidiquement connectée à la canalisation de déviation 560 et dont une sortie est fluidiquement connectée au boudin principal 352.

Le système de pressurisation et de dépressurisation particulier 550 comporte également :
- une première vanne 564 disposée au niveau de l'entrée de la canalisation de déviation 560 et qui peut prendre alternativement une position ouverte autorisant le passage entre la section d'entrée 554 et la canalisation de déviation 560 ou une position fermée empêchant le passage entre la section d'entrée 554 et la canalisation de déviation 560,
- une deuxième vanne 566 disposée au niveau de l'entrée de la canalisation terminale 562 et qui peut prendre alternativement une première position autorisant le passage entre la canalisation de déviation 560 et la canalisation terminale 562 depuis l'entrée de la canalisation de déviation 560 et empêchant le passage entre la canalisation terminale 562 et la canalisation de déviation 560 vers la sortie de la canalisation de déviation 560, et une deuxième position autorisant le passage entre la canalisation terminale 562 et la canalisation de déviation 560 vers la sortie de la canalisation de déviation 560 et empêchant le passage entre la canalisation de déviation 560 et la canalisation terminale 562 depuis l'entrée de la canalisation de déviation 560, et
- une troisième vanne 568 disposée au niveau de la sortie de la canalisation de déviation 560 et qui peut prendre alternativement une position ouverte autorisant le passage entre la canalisation de déviation 560 et la section de sortie 556 ou une position fermée empêchant le passage entre la canalisation de déviation 560 et la section de sortie 556.

Chaque vanne 564, 566, 568 est commandée en position par l'unité de contrôle.

La Fig. 5 correspond au gonflement des boudins secondaires 354. La première vanne 564 est en position ouverte, la deuxième vanne 566 est dans la première position, et la troisième vanne 568 est en position fermée. L'air venant de la veine 204 est alors dirigé dans le boudin principal 352 et dans chaque boudin secondaire 354 pour les gonfler et chaque voile 252 est amené en position déployée.

La Fig. 6 correspond à une position de maintien des boudins secondaires 354 à l'état gonflé. La première vanne 564 est en position fermée, la deuxième vanne 566 est dans la première position ou dans la deuxième position, et la troisième vanne 568 est en position fermée. L'air qui est dans le boudin principal 352 et dans chaque boudin secondaire 354 est alors bloqué.

La Fig. 7 correspond au dégonflement des boudins secondaires 354. La première vanne 564 est en position fermée, la deuxième vanne 566 est dans la deuxième position, et la troisième vanne 568 est en position ouverte. L'air du boudin principal 352 et de chaque boudin secondaire 354 est aspiré par l'effet Venturi dans la section intermédiaire 556 et chaque boudin secondaire 354 est dégonflé et chaque voile 252 est ramené en position pliée.

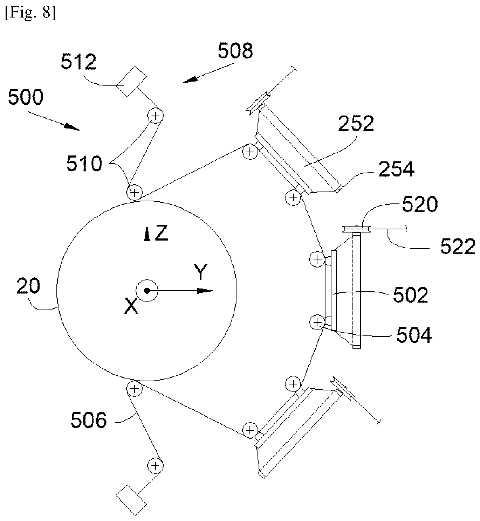

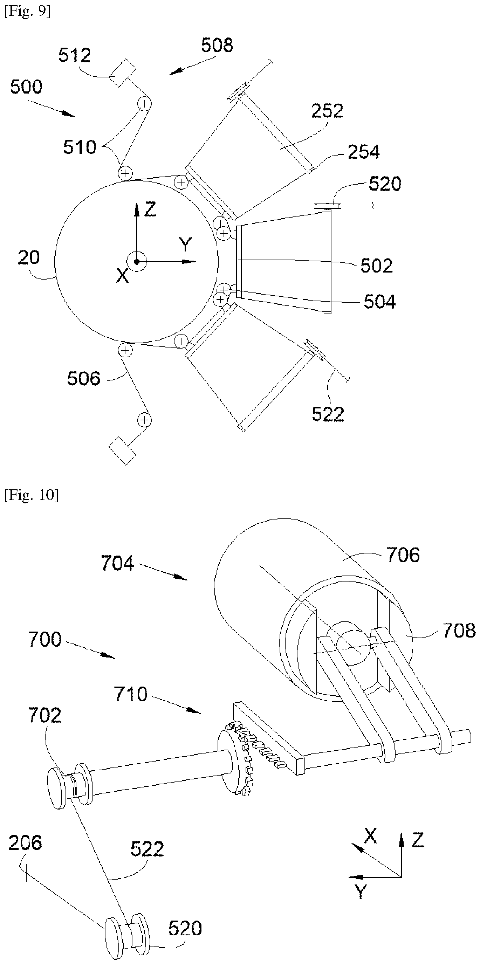

Dans le mode de réalisation des Figs. 8 et 9, la fixation directe du premier bord de chaque voile 252 au capot mobile 216 est remplacée par une fixation indirecte à travers des rouleaux 254. Ce mode de réalisation permet d'améliorer le déploiement et le pliage des voiles 252 en assistant le système pneumatique 350.

La nacelle 102 comporte ainsi, pour chaque voile 252, un rouleau 254 monté libre en rotation sur le capot mobile 216. Chaque rouleau 254 est monté à l'intérieur du capot mobile 216, en dehors de la veine 204 et en arrière de la fenêtre 220 lorsque le capot mobile 216 est en position reculée. Les rouleaux 254 sont distribués angulairement autour de la direction longitudinale X le long du pourtour du capot mobile 216.

En position pliée, chaque voile 252 s'enroule autour du rouleau 254 associé. Ainsi, en position pliée, le voile 252 est enroulé autour du rouleau 254 et en position déployée, le voile 252 est déroulé du rouleau 254 et étendu entre le rouleau 254 et le moteur 20 en travers de la veine 204 afin de l'obturer. Le premier bord de chaque voile 252 est ainsi fixé au rouleau 254 associé et le deuxième bord s'éloigne du rouleau 254 dans la position déployée et se rapproche du rouleau 254 en position pliée.

Ici, l'axe de rotation de chaque rouleau 254 est inscrit dans un plan perpendiculaire à la direction longitudinale X et est perpendiculaire à la direction radiale par rapport à la direction longitudinale X et passant par le milieu du rouleau 254.

La nacelle 102 comporte également un mécanisme de déploiement qui est arrangé pour déplacer le deuxième bord de chaque voile 252 afin de déplacer ledit voile 252 de la position pliée à la position déployée et un mécanisme de pliage qui est arrangé pour entraîner chaque rouleau 254 en rotation afin de déplacer le voile 252 associé audit rouleau 254 de la position déployée à la position pliée.

Comme précédemment, les mécanismes de déploiement et de pliage sont synchronisés avec le déplacement du capot mobile 216 pour que le passage de la position pliée à la position déployée corresponde au passage de la position avancée à la position reculée, et pour que le passage de la position déployée à la position pliée corresponde au passage de la position reculée à la position avancée.

Au cours du déplacement de la position avancée/pliée vers la position reculée/déployée, le mécanisme de déploiement aide au déploiement de chaque voile 252 en travers de la veine 204.

A l'inverse, au cours du déplacement de la position reculée/déployée vers la position avancée/pliée, le mécanisme de pliage plie chaque voile 252 sur l'extérieur de la veine 204.

Les Figs. 8 et 9 montrent un mécanisme de déploiement 500 selon un mode de réalisation particulier. Sur ces Figs. 8 et 9, seulement trois voiles 252 sont représentés pour des facilités de compréhension mais les autres voiles 252 sont disposés angulairement autour de la direction longitudinale X.

Pour chaque voile 252, le mécanisme de déploiement 500 comporte une plaque 502 solidaire du deuxième bord dudit voile 252 et qui assure la rigidité dudit deuxième bord. Chaque boudin secondaire 354 associé audit voile 252 peut être fixé à cette plaque 502.

Chaque plaque 502 porte au moins une poulie de tirage 504 montée libre en rotation sur ladite plaque 502. Ici, pour des raisons d'équilibrage, la plaque 502 porte une poulie de tirage 504 à chaque extrémité de ladite plaque 502, c'est-à-dire à chaque extrémité du deuxième bord.

Pour plusieurs voiles 252, le mécanisme de déploiement 500 comporte également un câble 506 qui passe par chaque poulie de tirage 504 desdits plusieurs voiles 252. Dans le mode de réalisation de l'invention présenté aux Figs. 8 et 9, il y a deux câbles 506, un pour les voiles 252 de bâbord (non représenté) et un pour les voiles 252 de tribord. Bien sûr une répartition différente est possible.

Pour chaque extrémité du câble 506, le mécanisme de déploiement 500 comporte un système de déplacement 508 qui assure le tirage de ladite extrémité. Ainsi, un tirage de chaque extrémité du câble 506 va tendre ledit câble 506 et déployer chaque voile 252 par déplacement de la plaque 502 associée sous l'effet du câble 506.

Chaque système de déplacement 508 comporte ici un ensemble de poulies de guidage 510 et un enrouleur électrique 512 sur lequel s'enroule le câble 506.

Le mécanisme de pliage consiste en un mécanisme qui assure la rotation de chaque rouleau 254 dans le sens de l'enroulement du voile 252 sur le rouleau 254.

Lorsque le mécanisme de pliage est activé, le mécanisme de déploiement doit être débrayé pour ne pas générer de force de retenue du voile 252. Dans le cas des Figs. 8 et 9, chaque système de déplacement 508, et plus particulièrement chaque enrouleur électrique 512, doit être débrayé pour tourner librement.

La Fig. 10 montre un mécanisme de pliage 700 selon un mode de réalisation particulier.

Pour chaque rouleau 254, le mécanisme de pliage 700 comporte une poulie de déviation 520 fixée de manière coaxiale au rouleau 254, une poulie d'enroulement 702 fixée à la structure fixe 206 et un câble d'enroulement 522 dont une extrémité est fixée à la structure fixe 206 et dont l'autre extrémité est fixée à la poulie d'enroulement 702 et où le câble d'enroulement 522 passe par la poulie de déviation 520.

Pour chaque rouleau 254, le mécanisme de pliage 700 comporte un amortisseur à azote 704 qui comporte un cylindre 706 fixé à la structure fixe 206 et un piston 708 coulissant dans le cylindre 706.

Pour chaque rouleau 254, le mécanisme de pliage 700 comporte également un système de transformation 710 qui assure la transformation du mouvement de rotation de la poulie d'enroulement 702 en un mouvement de translation du piston 708 et inversement.

Le système de transformation 710 prend ici la forme d'un système pignon-crémaillère.

A partir de la position avancée, l'ensemble mobile 214 recule, ce qui tend à déplacer la poulie de déviation 520 vers l'arrière et donc à dérouler le câble d'enroulement 522 de la poulie d'enroulement 702.

Par action du système de transformation 710, la rotation de la poulie d'enroulement 522 entraîne un enfoncement du piston 708 dans le cylindre 706 et donc une compression de l'azote présent dans l'amortisseur à azote 704.

A l'inverse, à partir de la position reculée, lorsque l'ensemble mobile 214 avance, le câble d'enroulement 522 se détend et la pression de l'azote contre le piston 708 repousse celui-ci et par action du système de transformation 710, le déplacement en translation du piston 708 entraîne la rotation de la poulie d'enroulement 702 qui enroule le câble d'enroulement 522 et en se faisant, entraîne la rotation de la poulie de déviation 520 qui, à son tour, entraîne le rouleau 254 et donc l'enroulement du voile 252.

Selon un autre mode de réalisation, le mécanisme de pliage peut comporter un enrouleur électrique débrayable sur lequel est fixée la poulie d'enroulement 702 et qui remplace ainsi l'amortisseur à azote 704 et le système de transformation 710. Le mécanisme de pliage comporte alors pour chaque rouleau 254, une poulie de déviation 520 fixée de manière coaxiale au rouleau 254, une poulie d'enroulement 702, un câble d'enroulement 522 dont une extrémité est fixée à la structure fixe 206 et dont l'autre extrémité est fixée à la poulie d'enroulement 702 et où le câble d'enroulement 522 passe par la poulie de déviation 520, et un enrouleur électrique débrayable sur lequel est fixée la poulie d'enroulement 702. Le débrayage de l'enrouleur électrique permet le déploiement du voile 252 lorsque le mécanisme de déploiement 500 est actionné.

L'unité de contrôle est connectée aux différents éléments pour les activer selon les besoins. Par exemple, l'unité de contrôle commande la rotation dans un sens ou dans un autre de chaque enrouleur électrique et de chaque actionneur déplaçant le capot mobile 216.

Chaque voile 252 doit présenter des caractéristiques structurelles suffisantes pour résister aux efforts engendrés par le flux secondaire 208 et être suffisamment souple pour pouvoir se plier. Selon un mode de réalisation particulier, chaque voile 252 est constitué d'une structure en mailles souples sur laquelle est fixée une peau souple telle qu'un tissu par exemple.

L'invention a été plus particulièrement décrite dans le cas d'une nacelle sous une aile mais elle peut s'appliquer à une nacelle située à l'arrière du fuselage.

## Revendications

1. Turboréacteur double flux (100) présentant une direction longitudinale (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule de l'avant vers l'arrière du turboréacteur double flux (100), ladite nacelle (102) comportant :
- une structure fixe (206) fixée au carter de soufflante (202),
- un capot mobile (216) qui est mobile en translation sur la structure fixe (206) selon une direction de translation entre une position avancée dans laquelle le capot mobile (216) est positionné de manière à ce qu'il soit rapproché du carter de soufflante (202) et une position reculée dans laquelle le capot mobile (216) est positionné de manière à ce qu'il soit éloigné du carter de soufflante (202) pour définir entre eux une fenêtre (220) ouverte entre la veine (204) et l'extérieur de la nacelle (102),
- un ensemble d'actionneurs assurant le déplacement du capot mobile (216) entre la position avancée et la position reculée, et inversement,
- une pluralité de voiles (252) souples, présentant un premier bord fixé au capot mobile (216) et un deuxième bord opposé au premier bord, où ledit voile (252) peut prendre alternativement une position pliée dans laquelle ledit voile (252) est logé dans le capot mobile (216) ou une position déployée dans laquelle ledit voile (252) est étendu entre le premier bord et le moteur (20) en travers de la veine (204), et **caractérisé en ce qu'**il comprend:
- un système pneumatique (350) arrangé pour déplacer le deuxième bord de chaque voile (252) afin de déplacer ledit voile (252) de la position pliée à la position déployée et pour déplacer le deuxième bord de chaque voile (252) afin de déplacer ledit voile (252) de la position déployée à la position pliée, où le système pneumatique (350) comporte :
- un boudin principal (352) rigide et fixé à l'intérieur du capot mobile (216) à l'arrière de la fenêtre (220),
- pour chaque voile (252), au moins un boudin secondaire (354) extensible et solidaire du boudin principal (352) et où l'intérieur de chaque boudin secondaire (354) est en continuité fluidique avec l'intérieur du boudin principal (352), où le deuxième bord dudit voile (252) est fixé à chacun desdits boudins secondaires (354), et
- un système de pressurisation et de dépressurisation (550) qui, alternativement, génère une pression dans le boudin principal (352) et donc dans chaque boudin secondaire (354) pour les gonfler lors du passage de la position avancée à la position reculée, ou génère une dépression dans le boudin principal (352) et donc dans chaque boudin secondaire (354) pour les dégonfler lors du passage de la position reculée à la position avancée.

2. Turboréacteur double flux (100) selon la revendication 1, **caractérisé en ce que** le système de pressurisation et de dépressurisation (550) comporte :
- un tube à effet Venturi (552) avec une section d'entrée (554), une section de sortie (556) et une section intermédiaire (558) entre la section d'entrée (554) et la section de sortie (556), où la section d'entrée (554) est fluidiquement connectée à un point de prélèvement d'air dans la veine (204),
- une canalisation de déviation (560) dont une entrée est fluidiquement connectée à la section d'entrée (554) et dont une sortie est fluidiquement connectée à la section intermédiaire (558),
- une canalisation terminale (562) dont une entrée est fluidiquement connectée à la canalisation de déviation (560) et dont une sortie est fluidiquement connectée au boudin principal (352),
- une première vanne (564) disposée au niveau de l'entrée de la canalisation de déviation (560) et qui peut prendre alternativement une position ouverte autorisant le passage entre la section d'entrée (554) et la canalisation de déviation (560) ou une position fermée empêchant le passage entre la section d'entrée (554) et la canalisation de déviation (560),
- une deuxième vanne (566) disposée au niveau de l'entrée de la canalisation terminale (562) et qui peut prendre alternativement une première position autorisant le passage entre la canalisation de déviation (560) et la canalisation terminale (562) depuis l'entrée de la canalisation de déviation (560) et empêchant le passage entre la canalisation terminale (562) et la canalisation de déviation (560) vers la sortie de la canalisation de déviation (560), et une deuxième position autorisant le passage entre la canalisation terminale (562) et la canalisation de déviation (560) vers la sortie de la canalisation de déviation (560) et empêchant le passage entre la canalisation de déviation (560) et la canalisation terminale (562) depuis l'entrée de la canalisation de déviation (560), et
- une troisième vanne (568) disposée au niveau de la sortie de la canalisation de déviation (560) et qui peut prendre alternativement une position ouverte autorisant le passage entre la canalisation de déviation (560) et la section de sortie (556) ou une position fermée empêchant le passage entre la canalisation de déviation (560) et la section de sortie (556).

3. Turboréacteur double flux (100) selon l'une des revendications 1 ou 2, **caractérisé en ce qu'**il comporte :
- pour chaque voile (252), un rouleau (254) monté libre en rotation sur le capot mobile (216) en arrière de la fenêtre (220) lorsque le capot mobile (216) est en position reculée, où le premier bord dudit voile (252) est fixé audit rouleau (254), où en position pliée ledit voile (252) est enroulé autour du rouleau (254) ou en position déployée ledit voile (252) est déroulé du rouleau (254),
- un mécanisme de déploiement (500) arrangé pour déplacer le deuxième bord de chaque voile (252) afin de déplacer ledit voile (252) de la position pliée à la position déployée, et
- un mécanisme de pliage (700) arrangé pour entraîner chaque rouleau (254) en rotation afin de déplacer le voile (252) associé audit rouleau (254) de la position déployée à la position pliée.

4. Turboréacteur double flux (100) selon la revendication 3, **caractérisé en ce que** le mécanisme de déploiement (500) comporte :
- pour chaque deuxième bord, une plaque (502) solidaire du deuxième bord,
- pour chaque plaque (502), au moins une poulie de tirage (504) montée libre en rotation sur ladite plaque (502),
- un câble (506) qui passe par chaque poulie de tirage (504), et
- pour chaque extrémité dudit câble (506), un système de déplacement (508) débrayable qui assure le tirage de ladite extrémité.

5. Turboréacteur double flux (100) selon la revendication 4, **caractérisé en ce qu'**il y a une poulie de tirage (504) à chaque extrémité de ladite plaque (502).

6. Turboréacteur double flux (100) selon l'une des revendications 4 ou 5, **caractérisé en ce que** chaque système de déplacement (508) comporte un ensemble de poulies de guidage (510) et un enrouleur électrique (512) sur lequel s'enroule le câble (506).

7. Turboréacteur double flux (100) selon l'une des revendications 4 à 6, **caractérisé en ce que** le mécanisme de pliage (700) comporte pour chaque rouleau (254), une poulie de déviation (520) fixée de manière coaxiale au rouleau (254), une poulie d'enroulement (702) fixée à la structure fixe (206), un câble d'enroulement (522) dont une extrémité est fixée à la structure fixe (206) et dont l'autre extrémité est fixée à la poulie d'enroulement (702) et où le câble d'enroulement (522) passe par la poulie de déviation (520), un amortisseur à azote (704) dont un cylindre (706) est fixé à la structure fixe (206) et dont un piston (708) est coulissant dans le cylindre (706), et un système de transformation (710) qui assure la transformation du mouvement de rotation de la poulie d'enroulement (702) en un mouvement de translation du piston (708) et inversement.

8. Turboréacteur double flux (100) selon l'une des revendications 4 à 6, **caractérisé en ce que** le mécanisme de pliage comporte pour chaque rouleau (254), une poulie de déviation (520) fixée de manière coaxiale au rouleau (254), une poulie d'enroulement (702), un câble d'enroulement (522) dont une extrémité est fixée à la structure fixe (206) et dont l'autre extrémité est fixée à la poulie d'enroulement (702) et où le câble d'enroulement (522) passe par la poulie de déviation (520), et un enrouleur électrique débrayable sur lequel est fixée la poulie d'enroulement (702).

9. Aéronef (10) comportant au moins un turboréacteur double flux (100) selon l'une des revendications précédentes.

## Patentansprüche

1. Zweistrom-Turbostrahltriebwerk (100), das eine Längsrichtung (X) hat und einen Motor (20) und eine den Motor (20) umgebende Gondel (102) aufweist, das ein Gebläsegehäuse (202) aufweist, wobei ein Strömungskanal (204) eines Sekundärstroms (208) zwischen der Gondel (102) und dem Motor (20) begrenzt ist und in dem ein Luftstrom von vorne nach hinten im Zweistrom-Turbostrahltriebwerk (100) zirkuliert, wobei die Gondel (102) aufweist:
- eine am Gebläsegehäuse (202) befestigte ortsfeste Struktur (206),
- eine bewegliche Haube (216), die auf der ortsfesten Struktur (206) gemäß einer Translationsrichtung zwischen einer vorgeschobenen Stellung, in der die bewegliche Haube (216) so positioniert ist, dass sie dem Gebläsegehäuse (202) nahe ist, und einer zurückgezogenen Stellung translationsbeweglich ist, in der die bewegliche Haube (216) so positioniert ist, dass sie vom Gebläsegehäuse (202) entfernt ist, um zwischen ihnen ein Fenster (220) zu definieren, das zwischen dem Strömungskanal (204) und der Außenumgebung der Gondel (102) offen ist,
- einen Satz von Stellantrieben, die die Verschiebung der beweglichen Haube (216) zwischen der vorgeschobenen Stellung und der zurückgezogenen Stellung und umgekehrt gewährleisten,
- eine Vielzahl von biegsamen Segeln (252), die einen an der beweglichen Haube (216) befestigten ersten Rand und einen dem ersten Rand gegenüberliegenden zweiten Rand aufweisen, wobei das Segel (252) abwechselnd eine gefaltete Stellung, in der das Segel (252) in der beweglichen Haube (216) untergebracht ist, oder eine auseinandergefaltete Stellung einnehmen kann, in der das Segel (252) zwischen dem ersten Rand und dem Motor (20) quer zum Strömungskanal (204) ausgestreckt ist,
und **dadurch gekennzeichnet, dass** es enthält:
- ein pneumatisches System (350), das eingerichtet ist, um den zweiten Rand jedes Segels (252) zu verschieben, um das Segel (252) von der gefalteten Stellung in die auseinandergefaltete Stellung zu verschieben, und um den zweiten Rand jedes Segels (252) zu verschieben, um das Segel (252) von der ausgefalteten Stellung in die gefaltete Stellung zu verschieben, wobei das pneumatische System (350) aufweist:
- einen starren und innerhalb der beweglichen Haube (216) hinter dem Fenster (220) befestigten Hauptwulst (352),
- für jedes Segel (252) mindestens einen dehnbaren und fest mit dem Hauptwulst (352) verbundenen Sekundärwulst (354) und wobei das Innere jedes Sekundärwulsts (354) mit dem Inneren des Hauptwulsts (352) in fluidischer Kontinuität ist, wobei der zweite Rand des Segels (252) an jedem der Sekundärwülste (354) befestigt ist, und
- ein Druckbeaufschlagungs- und Druckentlastungssystem (550), das abwechselnd einen Druck im Hauptwulst (352) und somit in jedem Sekundärwulst (354) erzeugt, um sie beim Übergang von der vorgeschobenen Stellung in die zurückgezogene Stellung aufzublasen, oder einen Unterdruck im Hauptwulst (352) und somit in jedem Sekundärwulst (354) erzeugt, um sie beim Übergang von der zurückgezogenen Stellung in die vorgeschobene Stellung zu entleeren.

2. Zweistrom-Turbostrahltriebwerk (100) nach Anspruch 1, **dadurch gekennzeichnet, dass** das Druckbeaufschlagungs- und Druckentlastungssystem (550) aufweist:
- ein Venturi-Rohr (552) mit einem Eingangsabschnitt (554), einem Ausgangsabschnitt (556) und einem Zwischenabschnitt (558) zwischen dem Eingangsabschnitt (554) und dem Ausgangsabschnitt (556), wobei der Eingangsabschnitt (554) mit einem Luftentnahmepunkt im Strömungskanal (204) in Fluidverbindung steht,
- eine Umlenkleitung (560), von der ein Eingang mit dem Eingangsabschnitt (554) in Fluidverbindung steht und von der ein Ausgang mit dem Zwischenabschnitt (558) in Fluidverbindung steht,
- eine Endleitung (562), von der ein Eingang mit der Umlenkleitung (560) in Fluidverbindung steht und von der ein Ausgang mit dem Hauptwulst (352) in Fluidverbindung steht,
- ein erstes Ventil (564), das im Bereich des Eingangs der Umlenkleitung (560) angeordnet ist und das abwechselnd eine offene Stellung, die den Durchgang zwischen dem Eingangsabschnitt (554) und der Umlenkleitung (560) erlaubt., oder eine geschlossene Stellung einnehmen kann, die den Durchgang zwischen dem Eingangsabschnitt (554) und der Umlenkleitung (560) verhindert,
- ein zweites Ventil (566), das im Bereich des Eingangs der Endleitung (562) angeordnet ist und das abwechselnd eine erste Stellung, die den Durchgang zwischen der Umlenkleitung (560) und der Endleitung (562) vom Eingang der Umlenkleitung (560) erlaubt und den Durchgang zwischen der Endleitung (562) und der Umlenkleitung (560) zum Ausgang der Umlenkleitung (560) verhindert, und eine zweite Stellung einnehmen kann, die den Durchgang zwischen der Endleitung (562) und der Umlenkleitung (560) zum Ausgang der Umlenkleitung (560) erlaubt und den Durchgang zwischen der Umlenkleitung (560) und der Endleitung (562) vom Eingang der Umlenkleitung (560) verhindert, und
- ein drittes Ventil (568), das im Bereich des Ausgangs der Umlenkleitung (560) angeordnet ist und das abwechselnd eine offene Stellung, die den Durchgang zwischen der Umlenkleitung (560) und dem Ausgangsabschnitt (556) erlaubt, oder eine geschlossene Stellung einnehmen kann, die den Durchgang zwischen der Umlenkleitung (560) und dem Ausgangsabschnitt (556) verhindert.

3. Zweistrom-Turbostrahltriebwerk (100) nach einem der Ansprüche 1 oder 2, **dadurch gekennzeichnet, dass** es aufweist:
- für jedes Segel (252) eine Walze (254), die frei drehend auf die bewegliche Haube (216) hinter dem Fenster (220) montiert ist, wenn die bewegliche Haube (216) in zurückgezogener Stellung ist, wobei der erste Rand des Segels (252) an der Walze (254) befestigt ist, wobei in gefalteter Stellung das Segel (252) um die Walze (254) gewickelt ist oder in auseinandergefalteter Stellung das Segel (252) von der Walze (254) abgewickelt ist,
- einen Auseinanderfaltmechanismus (500), der eingerichtet ist, um den zweiten Rand jedes Segels (252) zu verschieben, um das Segel (252) von der gefalteten Stellung in die auseinandergefaltete Stellung zu verschieben, und
- einen Faltmechanismus (700), der eingerichtet ist, um jede Walze (254) in Drehung anzutreiben, um das der Walze (254) zugeordnete Segel (252) von der auseinandergefalteten Stellung in die gefaltete Stellung zu verschieben.

4. Zweistrom-Turbostrahltriebwerk (100) nach Anspruch 3, **dadurch gekennzeichnet, dass** der Auseinanderfaltmechanismus (500) aufweist:
- für jeden zweiten Rand eine fest mit dem zweiten Rand verbundene Platte (502),
- für jede Platte (502) mindestens eine Ziehrolle (504), die frei drehend auf die Platte (502) montiert ist,
- ein Seil (506), das durch jede Ziehrolle (504) geht, und
- für jedes Ende des Seils (506) ein ausrückbares Verschiebesystem (508), das das Ziehen des Endes gewährleistet.

5. Zweistrom-Turbostrahltriebwerk (100) nach Anspruch 4, **dadurch gekennzeichnet, dass** es an jedem Ende der Platte (502) eine Ziehrolle (504) gibt.

6. Zweistrom-Turbostrahltriebwerk (100) nach einem der Ansprüche 4 oder 5, **dadurch gekennzeichnet, dass** jedes Verschiebesystem (508) einen Satz von Leitrollen (510) und eine elektrische Aufwickeleinrichtung (512) aufweist, auf die das Seil (506) sich aufwickelt.

7. Zweistrom-Turbostrahltriebwerk (100) nach einem der Ansprüche 4 bis 6, **dadurch gekennzeichnet, dass** der Faltmechanismus (700) für jede Walze (254) eine koaxial an der Walze (254) befestigte Umlenkrolle (520), eine an der ortsfesten Struktur (206) befestigte Aufwickelrolle (702), ein Aufwickelseil (522), von dem ein Ende an der ortsfesten Struktur (206) befestigt ist und das andere Ende an der Aufwickelrolle (702) befestigt ist und wobei das Aufwickelseil (522) über die Umlenkrolle (520) verläuft, einen Stickstoffdämpfer (704), von dem ein Zylinder (706) an der ortsfesten Struktur (206) befestigt ist und von dem ein Kolben (708) im Zylinder (706) gleitet, und ein Umwandlungssystem (710) aufweist, das die Umwandlung der Drehbewegung der Aufwickelrolle (702) in eine Translationsbewegung des Kolbens (708) und umgekehrt gewährleistet.

8. Zweistrom-Turbostrahltriebwerk (100) nach einem der Ansprüche 4 bis 6, **dadurch gekennzeichnet, dass** der Faltmechanismus für jede Walze (254) eine koaxial an der Walze (254) befestigte Umlenkrolle (520), eine Aufwickelrolle (702), ein Aufwickelseil (522), von dem ein Ende an der ortsfesten Struktur (206) befestigt und das andere Ende an der Aufwickelrolle (702) befestigt ist und wobei das Aufwickelseil (522) über die Umlenkrolle (520) verläuft, und eine ausrückbare elektrische Aufwickeleinrichtung aufweist, an der die Aufwickelrolle (702) befestigt ist.

9. Luftfahrzeug (10), das mindestens ein Zweistrom-Turbostrahltriebwerk (100) nach einem der vorhergehenden Ansprüche aufweist.

## Claims

1. Turbofan engine (100) having a longitudinal direction (X) and comprising an engine (20) and a nacelle (102) surrounding the engine (20) which comprises a fan casing (202), in which a path (204) of a bypass stream (208) is delimited between the nacelle (102) and the engine (20) and in which an air stream circulates from front to rear of the turbofan engine (100), said nacelle (102) comprising:
- a fixed structure (206) fixed to the fan casing (202),
- a movable cowl (216) which is movable in translation on the fixed structure (206) in a direction of translation between an advanced position in which the movable cowl (216) is positioned in such a way that it is close to the fan casing (202) and a retracted position in which the movable cowl (216) is positioned in such a way that it is away from the fan casing (202) to define between them a window (220) which is opened between the flow path (204) and the outside of the nacelle (102),
- a set of actuators ensuring the displacement of the movable cowl (216) between the advanced position and the retracted position, and vice versa,
- a plurality of flexible veils (252), having a first edge fixed to the movable cowl (216) and a second edge opposite the first edge, in which said veil (252) can alternately assume a folded position in which said veil (252) is housed in the movable cowl (216) or a deployed position in which said veil (252) is extended between the first edge and the engine (20) across the flow path (204), and **characterized in that** it comprises:
- a pneumatic system (350) arranged to displace the second edge of each veil (252) in order to displace said veil (252) from the folded position to the deployed position and to displace the second edge of each veil (252) in order to displace said veil (252) from the deployed position to the folded position, in which the pneumatic system (350) comprises:
- a rigid main roll (352) fixed inside the movable cowl (216) to the rear of the window (220),
- for each veil (252), at least one extendable secondary roll (354) secured to the main roll (352) and in which the inside of each secondary roll (354) is in fluidic continuity with the inside of the main roll (352), in which the second end of said veil (252) is fixed to each of said secondary rolls (354), and
- a pressurization and depressurization system (550) which, alternately, generates a pressure in the main roll (352) and therefore in each secondary roll (354) to inflate them in the transition from the advanced position to the retracted position, or generates a depression in the main roll (352) and therefore in each secondary roll (354) to deflate them in the transition from the retracted position to the advanced position.

2. Turbofan engine (100) according to Claim 1, **characterized in that** the pressurization and depressurization system (550) comprises:
- a Venturi-effect tube (552) with an inlet section (554), an outlet section (556) and an intermediate section (558) between the inlet section (554) and the outlet section (556), in which the inlet section (554) is fluidically connected to an air take-off point in the flow path (204),
- a bypass line (560) of which an inlet is fluidically connected to the inlet section (554) and of which an outlet is fluidically connected to the intermediate section (558),
- a terminal line (562) of which an inlet is fluidically connected to the bypass line (560) and of which an outlet is fluidically connected to the main roll (352),
- a first valve (564) disposed at the inlet of the bypass line (560) and which can alternately assume an open position allowing the passage between the inlet section (554) and the bypass line (560) or a closed position preventing the passage between the inlet section (554) and the bypass line (560),
- a second valve (566) disposed at the inlet of the terminal line (562) and which can alternately assume a first position allowing the passage between the bypass line (560) and the terminal line (562) from the inlet of the bypass line (560) and preventing the passage between the terminal line (562) and the bypass line (560) to the outlet of the bypass line (560), and a second position allowing the passage between the terminal line (562) and the bypass line (560) to the outlet of the bypass line (560) and preventing the passage between the bypass line (560) and the terminal line (562) from the inlet of the bypass line (560), and
- a third valve (568) disposed at the outlet of the bypass line (560) and which can alternately assume an open position allowing the passage between the bypass line (560) and the outlet section (556) or a closed position preventing the passage between the bypass line (560) and the outlet section (556).

3. Turbofan engine (100) according to one of Claims 1 or 2, **characterized in that** it comprises:
- for each veil (252), a roller (254) mounted to rotate freely on the movable cowl (216) behind the window (220) when the movable cowl (216) is in retracted position, in which the first edge of said veil (252) is fixed to said roller (254), in which, in folded position, said veil (252) is wound around the roller (254) or in deployed position, said veil (252) is unwound from the roller (254),
- a deployment mechanism (500) arranged to displace the second edge of each veil (252) in order to displace said veil (252) from the folded position to the deployed position, and
- a folding mechanism (700) arranged to drive each roller (254) in rotation in order to displace the veil (252) associated with said roller (254) from the deployed position to the folded position.

4. Turbofan engine (100) according to Claim 3, **characterized in that** the deployment mechanism (500) comprises:
- for each second edge, a plate (502) secured to the second edge,
- for each plate (502), at least one pulling pulley (504) mounted to rotate freely on said plate (502),
- a cable (506) which passes through each pulling pulley (504), and
- for each end of said cable (506), a declutchable displacement system (508) which ensures the pulling of said end.

5. Turbofan engine (100) according to Claim 4, **characterized in that** there is a pulling pulley (504) at each end of said plate (502).

6. Turbofan engine (100) according to one of Claims 4 or 5, **characterized in that** each displacement system (508) comprises a set of guiding pulleys (510) and an electric winder (512) on which the cable (506) is wound.

7. Turbofan engine (100) according to one of Claims 4 to 6, **characterized in that** the folding mechanism (700) comprises, for each roller (254), a deflection pulley (520) fixed coaxially to the roller (254), a winding pulley (702) fixed to the fixed structure (206), a winding cable (522) of which one end is fixed to the fixed structure (206) and of which the other end is fixed to the winding pulley (702) and in which the winding cable (522) passes through the deflection pulley (520), a nitrogen damper (704) of which a cylinder (706) is fixed to the fixed structure (206) and of which a piston (708) slides in the cylinder (706), and a transformation system (710) which ensures the transformation of the rotational movement of the winding pulley (702) into a translational movement of the piston (708) and vice versa.

8. Turbofan engine (100) according to one of Claims 4 to 6, wherein the folding mechanism comprises, for each roller (254), a deflection pulley (520) fixed coaxially to the roller (254), a winding pulley (702), a winding cable (522) of which one end is fixed to the fixed structure (206) and of which the other end is fixed to the winding pulley (702) and in which the winding cable (522) passes through the deflection pulley (520), and a declutchable electric winder to which the winding pulley (702) is fixed.

9. Aircraft (10) comprising at least one turbofan engine (100) according to one of preceding claims.
